# EUROPÄISCHE PATENTSCHRIFT

(11) **EP 0 465 860 B1**
(45) Veröffentlichungstag und Bekanntmachung des Hinweises auf die Patenterteilung: **02.03.1994**
(21) Anmeldenummer: 91109661.8
(22) Anmeldetag: 12.06.1991
(51) Int. Cl.: B62D 25/00

(54) **Verschlussdeckel**
Closure cap
Bouchon

(30) Priorität: 13.07.1990 DE 4022307
(43) Veröffentlichungstag der Anmeldung: 15.01.1992
(73) Patentinhaber: TRW United-Carr GmbH & Co. KG, D-67677 Enkenbach-Alsenborn (DE)
(72) Erfinder: Kraus, Willibald, W-6718 Grünstandt (DE)
(74) Vertreter: Schieschke, Klaus, Dipl.-Ing.

(56) Entgegenhaltungen:
- DE-A- 3 011 448
- DE-A- 3 512 582
- DE-A- 3 831 433
- GB-A- 1 354 973

## Beschreibung

Die Erfindung bezieht sich auf einen Verschlußdeckel aus Kunststoff zum Verschließen einer in einem Träger, insbesondere einer Kraftfahrzeugkarosserie, angeordneten Öffnung, wobei die Flächen des Trägers beidseitig der Öffnung etwa parallel zueinander verlaufen, mit einem Grundteil mit einer zur Trägerwand ebenen, etwa senkrecht gerichteten, in die Öffnung einführbaren, umlaufenden Wandung, an welcher zwei einander gegenüberliegende, sich radial nach außen erstreckende, umlaufende Dichtlippen angeformt sind, die jeweils um die Öffnung herum die Flächen der Trägerwand beidseitig beaufschlagen.

Als Stand der Technik, von dem die vorliegende Erfindung ausgeht, ist bereits ein aus Kunststoff bestehender Verschlußdeckel bekannt (DE-A-35 12 582), welcher teilweise napfförmig eingezogen ist und einander gegenüberliegende Dichtlippen aufweist, die die entsprechenden Flächen eines Trägers oberseitig bzw. unterseitig der Öffnung beaufschlagen. Ähnlich ist gleichfalls ein aus Kunststoff bestehender Verschlußdeckel ausgebildet (GB-A-1 354 973), bei welchem außerdem ein sich unter Wärmeeinwirkung verformbarer Film vorhanden ist.

Weiterhin ist es bekannt, derartige Verschlußdeckel zweiteilig auszubilden mit einem zusätzlichen Element, welches mit einer Dichtlippe verbunden ist und als Verbindungssteg zu der Wandung führt, um hierdurch eine Verbesserung der Dichtwirkung zu erzielen (DE-A-30 11 448).

Alle vorgenannten bekannten Konstruktionen sind jedoch entweder bauaufwendig aufgebaut oder bieten nur eine ungenügende Dichtwirkung des in der Öffnung eines Trägers eingesetzten Verschlußdeckels. Gerade im Bereich der Kraftfahrzeugindustrie ist es jedoch erforderlich, bei kostensparendem Aufbau eines Verschlußdeckels eine gute Dichtwirkung zu erzielen, um beispielsweise den Kraftwageninnenraum vor unerwünschtem Schmutzeintritt zu schützen.

Demgegenüber liegt der vorliegenden Erfindung die Aufgabe zugrunde, einen Verschlußdeckel der eingangs genannten Art zu schaffen, welcher bei einfachem Aufbau eine verbesserte Dichtwirkung besitzt.

Diese Aufgabe wird erfindungsgemäß dadurch gelöst, daß an der Wandung im Bereich zwischen den Dichtlippen ein weiteres umlaufendes, eine Fläche des Trägers beaufschlagendes Dichtelement angeformt ist. Durch dieses zusätzliche Dichtelement, welches einstückig mit dem Verschlußdeckel verbunden ist, ergibt sich auf einfache Weise eine Verbesserung der Dichtwirkung des in einer Trägeröffnung eingesetzten Verschlußdeckels. Hierbei besteht erfindunsssemäß das Dichtelement aus zwei umlaufenden Flanschteilen, welche im Winkel zueinander verlaufen.

Vorteilhafterweise verläuft in weiterer Ausgestaltung der Erfindung das eine Flanschteil etwa parallel zu einer Fläche des Trägers, wobei das andere Flanschteil endseitig im rechten Winkel dazu angeordnet ist. Hierbei sind die beiden Flanschteile in etwa T-förmig liegend ausgebildet. Damit ergibt sich eine Verbesserung der Abdichtung durch das Zusammenwirken der beiden Flanschteile im Bereich einer Trägeröffnung.

Nach einem anderen Merkmal der Erfindung ist das Dichtelement im mittleren Bereich zwischen den beiden Dichtlippen an der Wandung angeordnet. Das an die Wandung angeformte Flanschteil kann hierbei eine geringere Wandstärke aufweisen als das im Winkel dazu angeordnete andere Flanschteil.

Weiterhin kann das Grundteil schalenartig, mit einer umlaufenden Rinne oder mit einem Mittelsteg mit Innenkörper ausgebildet sein. In jedem Fall ist an die Wandung ein umlaufendes Dichtelement angeformt, welches mit den beiden Flanschteilen etwa die Form eines liegenden T bildet.

Die Erfindung wird nachfolgend anhand von in der Zeichnung dargestellten Ausführungsbeispielen näher beschrieben. In der Zeichnung zeigen:

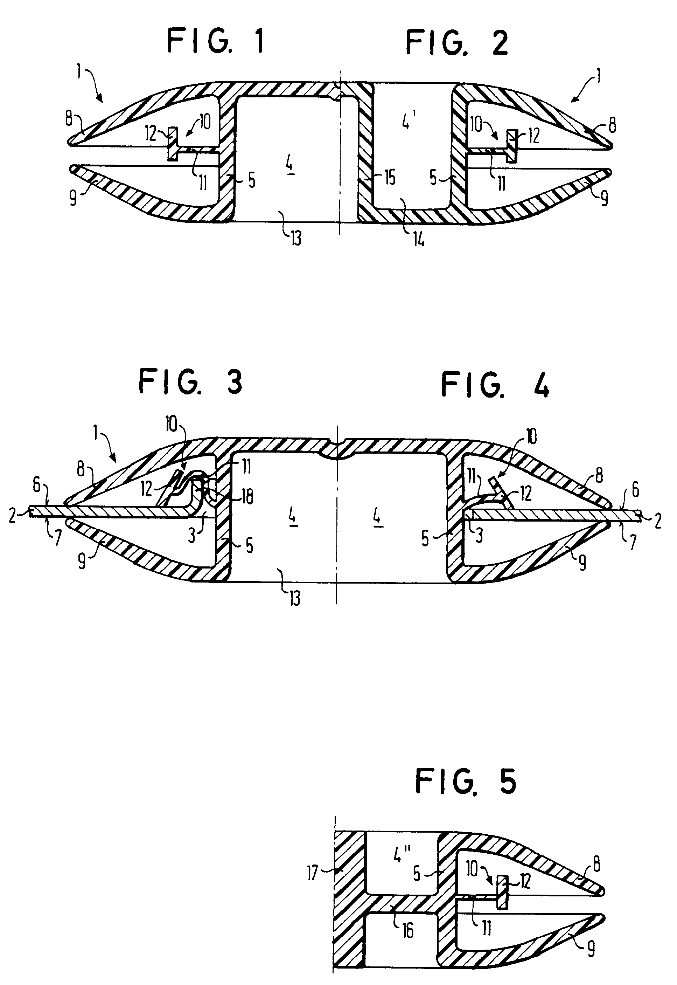

Fig. 1 bis 5 verschiedene Ausführungsformen der Erfindung im Halbschnitt, wobei die Fig. 3 und 4 jeweils einen Verschlußdeckel im Mittelschnitt im eingebauten Zustand darstellen.
Nach Fig. 1 besteht der Verschlußdeckel 1 im wesentlichen aus einem Grundteil 4 mit einer zylinderförmigen umlaufenden Wandung 5. An diesem Grundteil 4 sind im oberen und unteren Bereich zwei im wesentlichen konisch zulaufende Dichtlippen 8 und 9 angeordnet, welche federnd elastisch ausgebildet sind. Im mittleren Bereich der Wandung 5 des Grundteils 4 ist an den Außenumfang der Wandung ein weiteres umlaufendes Dichtelement 10 angeformt. Dieses Dichtelement 10 besteht aus einem umlaufenden Flanschteil 11, an welchen sich im rechten Winkel ein weiteres Flanschteil 12 anschließt. Die beiden Flanschteile 11 und 12 bilden damit etwa ein liegendes T. Hierbei kann beispielsweise das an die Wandung 5 angeformte Flanschteil 11 eine geringere Wandstärke aufweisen als das im rechten Winkel dazu angeordnete Flanschteil 12.

Bei dem Ausführungsbeispiel nach Fig. 1 ist das Grundteil 4 schalenartig ausgebildet, wobei sich im mittleren Bereich eine Schale 13 ergibt, die sich bis zu der Innenfläche der Wandung 5 erstreckt.

Bei dem Ausführungsbeispiel nach Fig. 2 ist das Grundteil 4' mit einer umlaufenden Rinne 14 versehen, welche zu einer Wandung 15 läuft, die etwa parallel zu der Wandung 5 des Grundteils 4' verläuft. Wiederum sind bei dieser Konstruktion an der zylindrischen Außenfläche der Wandung 5 die beiden Flanschteile 11 an der zylindrischen Außenfläche der Wandung 5 die beiden Flanschteile 11 und 12 angeformt, welche das umlaufende Dichtelement 10 im mittleren Bereich zwischen den beiden Dichtlippen 8 und 9 bilden.

Bei dem Ausführungsbeispiel nach Fig. 3 ist der erfindungsgemäße Verschlußdeckel 1 in einer Öffnung 3 eines Trägers 2 eingebaut. Hierbei weist der Träger 2 einen umlaufenden Kragen 18 auf, welcher die Öffnung 3 begrenzt. Wie ersichtlich, umgibt das Flanschteil 11 des Dichtelements 10 diesen Kragen 18 im Bereich der Öffnung 3, wobei sich andererseits das Flanschteil 12 so schräg an die Fläche 6 des Trägers 2 anlegt, daß eine mehrfache Dichtwirkung erzielt wird. Die beiden Dichtlippen 8 und 9 beaufschlagen die parallelen Flächen 6 und 7 des Trägers 2.

Bei dem Ausführungsbeispiel nach Fig. 4 weist der Träger eine Öffnung 3 auf, welche beispielsweise eine Bohrung sein kann. Wiederum ergibt sich eine mehrfache Dichtwirkung durch das Zusammenwirken des Flanschteils 11 und des Flanschteils 12 im Bereich der Öffnung 3 des Trägers 2. Auch hier beaufschlagen die beiden Dichtlippen 8 und 9 wiederum die entsprechenden Flächen des Trägers 2.

Bei den Ausführungsbeispielen nach Fig. 3 und 4 ist das Grundteil 4 in Form einer Schale 13 analog der Ausführungsform nach Fig. 1 gestaltet.

Nach Fig. 5 besteht nun auch die Möglichkeit, daß das Grundteil 4'' einen Mittelsteg 16 aufweist, welcher zu einem Innenkörper 17 verläuft. Dieser Innenkörper 17 kann im wesentlichen parallel zu der Wandung 5 des Grundteils 4'' verlaufen. Auch hier weist die Außenfläche der zylindrischen Wandung 5 das daran angeformte Dichtelement 10 auf, welches aus den beiden Flanschteilen 11 und 12 besteht.

Es ist nicht zwingend erforderlich, daß die beiden Flanschteile 11 und 12 im rechten Winkel zueinander stehen und daß das Flanschteil 12 gegenüber dem Flanschteil 11 in Form eines T angeformt ist. Es ist auch denkbar, daß das Flanschteil 12 im spitzen oder stumpfen Winkel zu dem Flanschteil 11 verläuft und eine andere Konfiguration mit dem Flanschteil 11 bildet. In jedem Fall soll gewährleistet werden, daß durch das Zusammenwirken der beiden Flanschteile 11 und 12 des Dichtelements 10 eine Verbesserung der Abdichtung im Bereich einer Öffnung 3 eines Trägers 2 auf einfache Weise erzielt wird.

## Patentansprüche

1. Verschlußdeckel (1) aus Kunststoff, zum Verschließen einer in einem Träger (2), insbesondere einer Kraftfahrzeugkarosserie angeordneten Öffnung (3), wobei die Flächen des Trägers (2) beidseitig der Öffnung (3) etwa parallel zueinander verlaufen und eine Trägerflächenebene definieren,
mit einem Grundteil (4) mit einer zur Trägerflächenebene etwa senkrecht gerichteten, in die Öffnung einführbaren, umlaufenden Wandung (5), an welcher zwei zueinander gegenüberliegende, sich radial nach außen erstreckende umlaufende Dichtlippen (8, 9) angeformt sind, die jeweils um die Öffnung herum die Flächen (6, 7) der Trägerwand beidseitig beaufschlagen,
dadurch gekennzeichnet, daß
an der Wandung (5) im Bereich zwischen den Dichtlippen (8, 9) ein weiteres umlaufendes, eine Fläche (6) des Trägers (2) beaufschlagendes Dichtelement (10) angeformt ist.

2. Verschlußdeckel nach Anspruch 1,
dadurch gekennzeichnet,
daß das Dichtelement (10) aus zwei umlaufenden Flanschteilen (11, 12) besteht, welche im Winkel zueinander verlaufen.

3. Verschlußdeckel nach Anspruch 2,
dadurch gekennzeichnet,
daß das eine Flanschteil (11) etwa parallel zur Trägerflächenebene verläuft und das andere Flanschteil (12) endseitig im rechten Winkel dazu angeordnet ist.

4. Verschlußdeckel nach Anspruch 2,
dadurch gekennzeichnet,
daß die beiden Flanschteile (11, 12) in etwa T-förmig liegend ausgebildet sind.

5. Verschlußdeckel nach einem der vorhergehenden Ansprüche,
dadurch gekennzeichnet,
daß das Dichtelement (10) im mittleren Bereich zwischen den beiden Dichtlippen (8, 9) an der Wandung (5) angeordnet ist.

6. Verschlußdeckel nach einem der vorhergehenden Ansprüche,
dadurch gekennzeichnet,
daß das an die Wandung (5) angeformte Flanschteil (11) eine geringere Wandstärke aufweist als das im Winkel dazu angeordnete Flanschteil (12).

7. Verschlußdeckel nach einem der vorhergehenden Ansprüche,
dadurch gekennzeichnet,
daß das Grundteil (4, 4', 4'') schalenartig, mit einer umlaufenden Rinne (14) oder mit einem Mittelsteg (16) mit Innenkörper (17) ausgebildet ist.

## Claims

1. Closure cover (1) made of plastic, for closing an opening (3) disposed in a support (2), in particular a motor vehicle body, the surfaces of the support (2) extending approximately parallel to each other on both sides of the opening (3) and defining a support surface plane, having a basic part (4) with a surrounding wall (5) which is directed approximately perpendicularly to the support surface plane, can be introduced into the opening and on which there are integrally formed two surrounding sealing lips (8, 9) which lie opposite each other, extend radially outwards and, around the opening, each act on the surfaces (6, 7) of the support wall on both sides, characterized in that a further surrounding sealing element (10), acting on a surface (6) of the support (2), is integrally formed on the wall (5) in the region between the sealing lips (8, 9).

2. Closure cover according to Claim 1, characterized in that the sealing element (10) comprises two surrounding flange parts (11, 12) which extend at an angle to each other.

3. Closure cover according to Claim 2, characterized in that one flange part (11) extends approximately parallel to the support surface plane and the other flange part (12) is arranged at the end thereof and at right angles thereto.

4. Closure cover according to Claim 2, characterized in that the two flange parts (11, 12) are designed lying in an approximately T-shaped arrangement.

5. Closure cover according to one of the preceding claims, characterized in that the sealing element (10) is arranged in the central region between the two sealing lips (8, 9), on the wall (5).

6. Closure cover according to one of the preceding claims, characterized in that the flange part (11) integrally formed on the wall (5) has a lower wall thickness than the flange part (12) arranged at an angle thereto.

7. Closure cover according to one of the preceding claims, characterized in that the basic part (4, 4', 4'') is designed in the manner of a shell, with a surrounding channel (14) or with a centre web (16) with inner body (17).

## Revendications

1. Bouchon (1) en matière plastique, destiné à obturer une ouverture (3) ménagée dans un support (2), notamment dans une carrosserie de véhicule automobile, les surfaces du support (2) s'étendant des deux côtés de l'ouverture (3) sensiblement parallèlement entre elles et définissant un plan de surface de support, avec une partie de base (4) munie d'une paroi (5) périphérique, dirigée sensiblement de façon perpendiculaire au plan de la surface de support et pouvant être introduite dans l'ouverture, paroi sur laquelle sont formées deux lèvres d'étanchéité (8, 9) périphériques, en opposition l'une de l'autre, s'étendant radialement vers l'extérieur, lèvres qui respectivement sollicitent l'ouverture des deux côtés autour des surfaces (6, 7) de la paroi de support, caractérisé en ce que sur la paroi (5) est formé dans la zone entre les lèvres d'étanchéité (8, 9) un élément d'étanchéité supplémentaire (10), circulaire sollicitant une surface (6) du support (2).

2. Bouchon selon la revendication 1, caractérisé en ce que l'élément d'étanchéité (10) est constitué de deux parties de collerette périphériques (11, 12), qui s'étendent selon un certain angle entre elles.

3. Bouchon selon la revendication 2, caractérisé en ce que l'une des parties de collerette (11) s'étend de façon sensiblement parallèle par rapport au plan de la surface de support et l'autre partie de collerette (12) est agencée sur le coté d'extrémité à angle droit par rapport à celle-ci.

4. Bouchon selon la revendication 2, caractérisé en ce que les deux parties de collerette (11, 12) sont sensiblement en forme de T.

5. Bouchon selon l'une des revendications précédentes, caractérisé en ce que l'élément d'étanchéité (12) est agencé dans la zone médiane entre les deux lèvres d'étanchéité (8, 9) sur la paroi (5).

6. Bouchon selon l'une des revendications précédentes, caractérisé en ce que l'élément de collerette (11) formé sur la paroi (5) présente une épaisseur de paroi inférieure à la partie de collerette (12) agencée selon un certain angle par rapport à celle-ci.

7. Bouchon selon l'une des revendications précédentes, caractérisé en ce que la partie de base (4, 4', 4'') forme une coquille avec une gorge périphérique (14) ou une entretoise médiane (16) munie d'un corps interne (17).
